# EUROPÄISCHE PATENTSCHRIFT

(11) **EP 3 706 291 B1**
(45) Veröffentlichungstag und Bekanntmachung des Hinweises auf die Patenterteilung: **20.03.2024**
(21) Anmeldenummer: 20160182.0
(22) Anmeldetag: 28.02.2020
(51) Int. Cl.: H02K 3/50, H02K 5/22, H02K 3/28, H02K 3/12

(54) **STATOR MIT PINS UND EINER SCHNITTSTELLE FÜR EINE ELEKTRISCHE MASCHINE**
STATOR WITH PINS AND AN INTERFACE FOR AN ELECTRIC MACHINE
STATOR POURVU DE BROCHES ET INTERFACE POUR UNE MACHINE ÉLECTRIQUE

(30) Priorität: 05.03.2019 DE 102019105563
(43) Veröffentlichungstag der Anmeldung: 09.09.2020
(73) Patentinhaber: Valeo eAutomotive Germany GmbH, 91056 Erlangen (DE)
(72) Erfinder: CIFTCIOGLU, Mert, 80807 München (DE); SONNACK, Dieter, 35410 Hungen (DE)
(74) Vertreter: Valeo Powertrain Systems

(56) Entgegenhaltungen:
- EP-A2- 0 829 944
- EP-A2- 1 137 156
- DE-A1-102016 219 221
- JP-A- 2005 130 667
- JP-B2- 5 365 862
- US-A1- 2008 280 469
- US-A1- 2013 147 306
- US-A1- 2018 097 417

## Beschreibung

Die Erfindung betrifft einen Stator mit Pins und einer Schnittstelle für eine elektrische Maschine, insbesondere einen Elektromotor.

### Stand der Technik

Elektrische Maschinen sind allgemein bekannt und finden als Elektromotor zunehmend Anwendung für den Antrieb von Fahrzeugen. Eine elektrische Maschine besteht aus einem Stator und einem Rotor.

Der Stator umfasst eine Vielzahl von Slots, in denen die Windungen geführt werden. Die Windungen können aus isolierten Kupferstäben als sogenannte Pins gebildet werden. Der Rotor befindet sich im Stator und ist mit einer Rotorwelle verbunden. DE102016219221 A1, JP 2005 130667 A und JP000005365862 B2 beschreibende einen solchen Stator.

### Aufgabe und Lösung

Aufgabe der vorliegenden Erfindung ist es, eine Schnittstelle an einem Stator mit Pins bereitzustellen, die kompakt und robust ist.

Erfindungsgemäß umfasst der Stator für eine elektrische Maschine eine Vielzahl von Pins, die auf mindestens zwei konzentrischen Kreisen angeordnet sind, eine Schnittstelle mit mindestens einer Kontaktfläche, die mit zwei elektrisch leitenden Beinen verbunden ist und durch die Beine gestützt wird, wobei die Beine mit mindestens einem Pin auf verschiedenen konzentrischen Kreisen verbunden sind. Mittels der Beine auf jeder Seiter der Schnittstelle wird die Kontaktfläche auf dem Stator abgestützt und ermöglicht dadurch einen festen Punkt zum Anschluss der Phasenleiter von einem Inverter.

Die Pins befinden sich auf einem statorinneren konzentrischen Kreis und einem statoräußeren konzentrischen Kreis.

Beim Anschluss der Schnittstelle an Pins auf lediglich äußeren und inneren konzentrischen Kreisen können die Pins auf konzentrischen Kreisen dazwischen durch die Schnittstelle überspannt werden.

Ein Bein weist eine Verdrehung zwischen dem Pin und der Kontaktfläche auf. Durch die Verdrehung werden die Isolationsabstände des Beins von anderen Pins eingehalten ohne die Stabilität des Beines zu beeinträchtigen.

In einer Ausgestaltung der Erfindung kann die Verdrehung sowohl axial als auch radial zum Stator vorliegen.

Mit dieser Verdrehung in zwei Richtungen wird die Stabilität des Beins weiter erhöht.

In einer weitere Ausgestaltung der Erfindung kann die Verdrehung sowohl axial als auch radial im Bereich von 80 bis 100 Grad, im Bezug zu einer Ausgangslage des Beines liegen.

In diesem Bereich sind sowohl die Isolationsabstände als auch die Stabilität ausreichend.

Bevorzugt kann zumindest ein Bein an eines der Schnittstelle abgewandtes Ende mit mindesten zwei Pins verbunden sein.

Mit der Verbindung von 2 Pins kann zusätzlich die Schnittstelle flexible an unterschiedliche Wicklungsschemata angepasst werden.

Weiter bevorzugt kann das Bein zwischen der Verdrehung und des der Schnittstelle abgewandten Endes in einem Winkel von 80 bis 100, insbesondere rechtwinklig, abknicken.

Durch die Abknickung in Richtung der zu kontaktierenden Pins kann das Bein über die nicht zu kontaktierenden Pins verlaufen und dabei einen Isolationsabstand erhöhen.

In einer weiteren Ausgestaltung der Erfindung kann die Schnittstelle an der Kontaktfläche eine Ausnehmung für einen Kontaktstift oder Kontaktschraube aufweisen.

Die Schnittstelle kann für eine Kontaktschraube ein Innengewinde aufweisen. Dieses Innengewinde hält die Kontaktschraube und wird durch die Beine auf dem Stator abgestützt. Eine stabile Verbindung zwischen Statorpins und Inverter kann somit hergestellt werden.

Die beiden Beine sind jeweils im Wesentlichen um 90 Grad zueinander gebogen und die Kontaktfläche befindet sich dazwischen.

Die Schnittstelle mit der Kontaktfläche befindet sich zwischen den beiden Beinen, die somit eine geringe Bauhöhe auf dem Stator aufweisen und gleichzeitig die Schnittstelle ausreichend stabil über dem Stator halten.

Bevorzugt können die Beine nicht in ein Inneres (I) hineinoder über ein Äußeres (A) des Stators (1) hinausragen.

Das Innere das Stators bleibt somit für den Rotor frei. Insbesondere während der Montage des Rotors im Stator kommt es nicht zu Platzkonflikten zwischen Rotor und Stator.

Das Äußere das Stators bleibt somit für das Gehäuse frei.

Insbesondere während der Montage des Stator im Gehäuse kommt es nicht zu Platzkonflikten zwischen Stator und Gehäuse.

Weiter bevorzugt kann unterhalb der Schnittstelle ein Leiter ausgewählte Pins verbinden.

Der Leiter verbindet beispielsweise Spulen zu einem gemeinsamen Sternpunkt unterhalb der Schnittstelle. Eine platzsparende Sternpunktverbindung kann somit hergestellt werden.

Erfindungsgemäß weist ein Fahrzeug (103) eine elektrische Maschine mit einem Stator gemäß einer der bevorzugten Ausgestaltungen auf.

### Figurenbeschreibung

Figur 1 zeigt einen Stator mit Schnittstellen für einen Anschluss eines Inverters.
Figur 2 zeigt eine Draufsicht auf einen Stator mit Schnittstellen für einen Anschluss eines Inverters.
Figur 3 zeigt ein Ausführungsbeispiel einer Schnittstelle. Figur 4 zeigt ein weiteres Ausführungsbeispiel einer Schnittstelle.
Figur 5 zeigt noch ein weiteres Ausführungsbeispiel einer Schnittstelle.
Figur 6 zeigt eine Draufsicht auf einen Stator mit Sternpunktverbindern.
Figur 7 zeigt ein Fahrzeug mit einer elektrischen Maschine, insbesondere einem Elektromotor, mit einem Stator mit Schnittstelle.

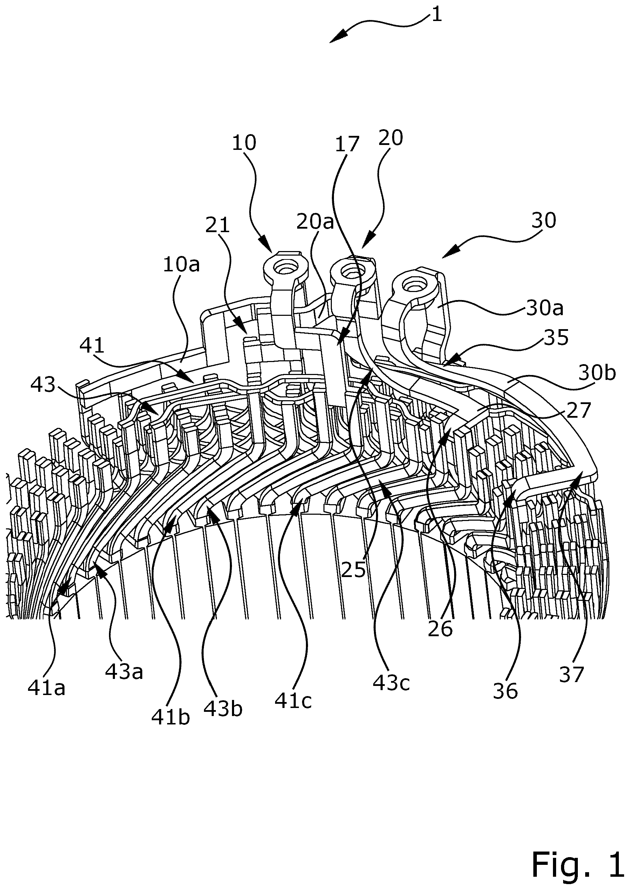

Der Stator 1 in Figur 1 weist eine Vielzahl von Pins auf, die teilweise leitend miteinander verbunden sind und Spulen um Statorzähne bilden. Im Innenbereich des Stators kann sich ein Rotor befinden und im Außenbereich des Stators beispielsweise ein Gehäuse.

Der Stator 1 weist drei Schnittstellen 10, 20, 30 auf. Jede Schnittstelle hat ein in Richtung des Statoräußeren liegendes Bein 10a, 20a, 30a und außerdem ein in Richtung des Statorinneren liegendes Bein 10b, 20b, 30b.

Das statorinnere Bein 20b, 30b weist eine axiale und radiale Verdrehung 25, 35 auf. Das statorinnere Bein 20b, 30b weist ferner an einem dem Stator zugewandtem Ende einen Knick 26, 36 in Richtung der Pins auf. Das statorinnere Bein 10, 20b, 30b weist des Weiteren eine Ecke 17, 27, 37 auf.

Der Sternpunktverbinder 41 verbindet die Pins 41a, 41b, 41c. Der darüber liegende Sternpunktverbinder 43 verbindet die Pins 43a, 43b, 43c. Die Sternpunktverbinder verlaufen in verschiedenen Ebenen, sodass auch die sie kontaktierenden Pins eine unterschiedliche Länge haben können.

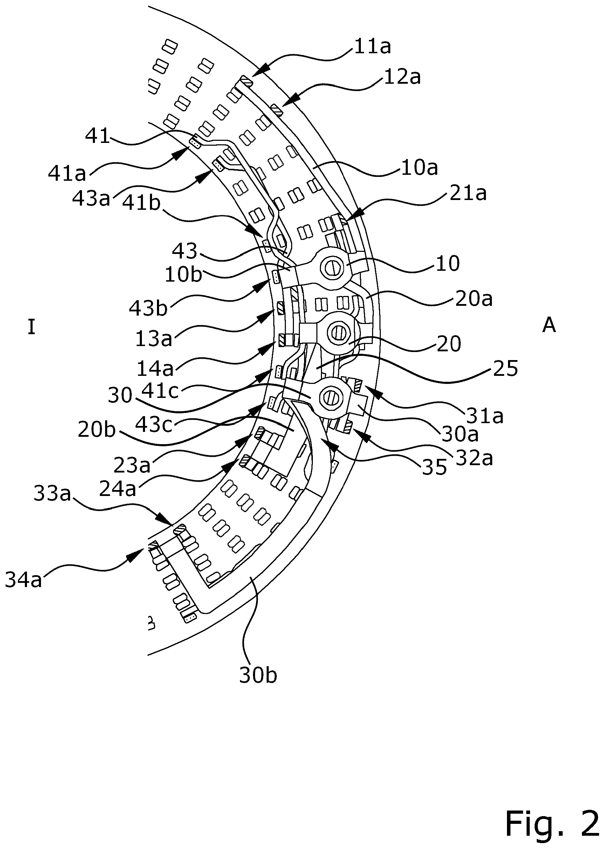

In der Figur 2 ist der Stator 1 mit Schnittstellen 10, 20, 30 und den Sternpunktverbindern 41, 43 aus Figur 1 in einer Draufsicht dargestellt. Zu erkennen ist das Statorinnere I für einen Rotor und das Statoräußere A für ein Gehäuse. Die drei Schnittstellen 10, 20, 30 bilden einen definierten Anschlusspunkt für einen Inverter.

Die Schnittstelle 10 ist über ein statoräußeres Bein 10a mit den schraffiert dargestellten Pins 11a und 12a verbunden. Des Weiteren ist die Schnittstelle 10 über das statorinnere Bein 10b mit den schraffiert dargestellten Pins 13a und 14a verbunden.

Die statoräußeren Pins 11a, 12a liegen auf einen anderen konzentrischen Kreis als die beiden statorinneren Pins 13a 14a.

Die Schnittstelle 20 weist ebenfalls ein statoräußeres Bein 20a auf, das mit dem schraffierten Pin 21a und einem weiteren nicht gezeigtem Pin verbunden ist, der unterhalb der Schnittstelle 10 liegt. Das statorinnere Bein 20b der Schnittstelle 20 ist mit den schraffiert dargestellten Pins 23a und 24a verbunden.

Die Schnittstelle 30 weist ebenfalls ein statoräußeres Bein 30a auf, das mit den schraffiert dargestellten Pins 31a und 32a verbunden ist. Das statorinnere Bein 30b der Schnittstelle 30 ist mit den schraffiert dargestellt Pins 33a und 34a verbunden.

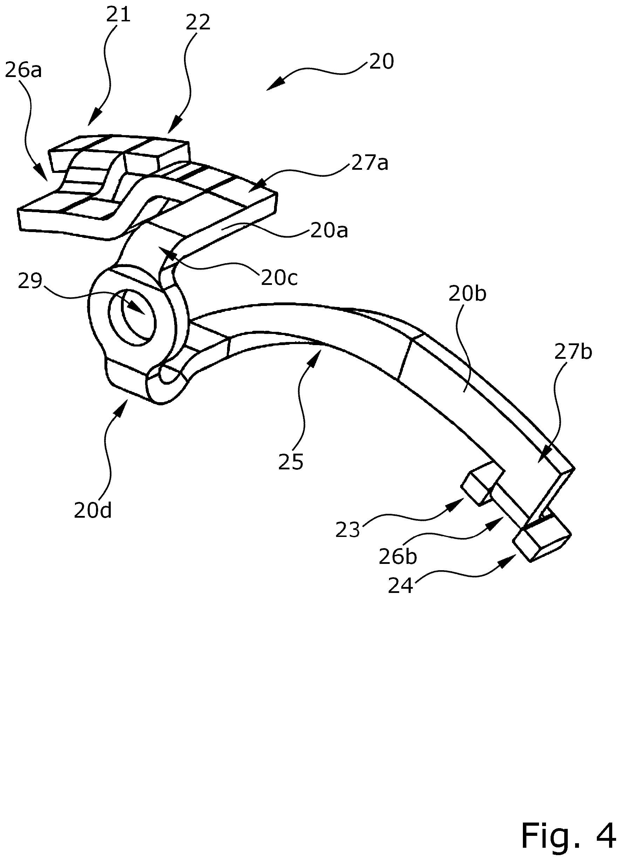

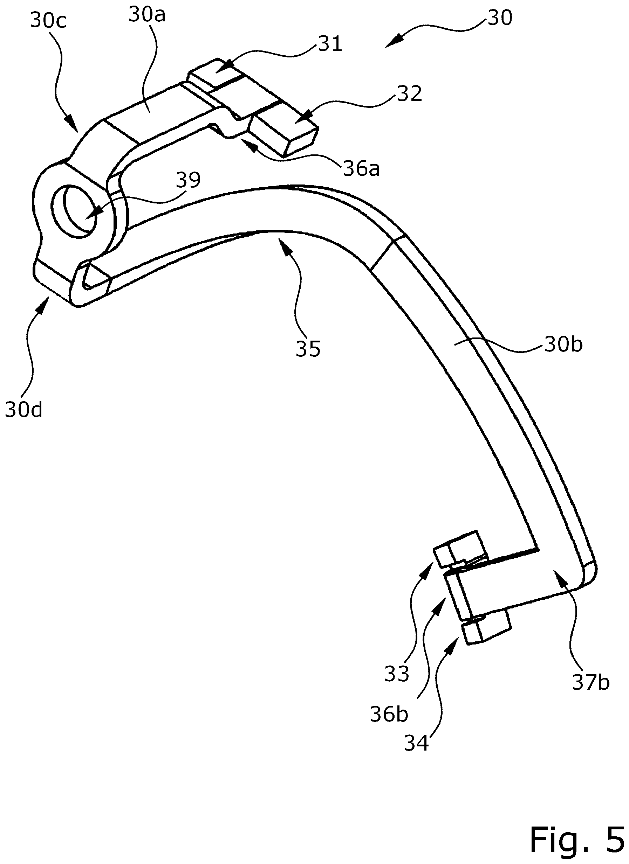

Das jeweils statorinnen liegende Bein 20b, 30b der Schnittstelle 20, 30 weißt jeweils eine Verdrehung 25, 35 auf. Die Verdrehung erfolgt sowohl radial zum Statormittelpunkt, als auch axial entlang einer Rotorachse. Ebenso weisen die beiden statorinneren Beine 20b und 30b einen Knick vor dem Kontakt mit den Pins auf, der besser in Figur 4 und 5 dargestellt ist.

Unterhalb der Schnittstellen 10, 20, 30 weist der Stator sogenannte Sternpunktverbinder 41, 43 in verschiedenen Ebenen auf. Die durch die verbundenen Pins gebildeten Spulen haben somit einen Sternpunkt.

Der Sternpunktverbinder 41 verbindet die Pins 41a, 41b, 41c. Der darüber liegende Sternpunktverbinder 43 verbindet die Pins 43a, 43b, 43c. Die Sternpunktverbinder verlaufen in verschiedenen Ebenen, sodass auch die sie kontaktierenden Pins eine unterschiedliche Länge haben können.

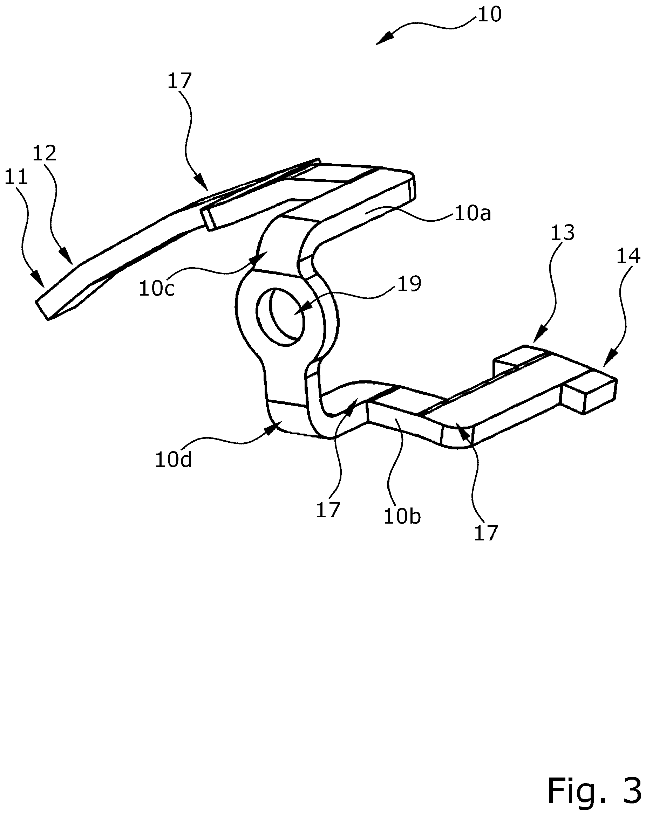

In Figur 3 ist die Schnittstelle 10 mit dem statoräußeren Bein 10a und dem statorinneren Bein 10b gezeigt. Das statoräußere Bein 10a weist ein Ecke 17a in Richtung der Kontaktpunkte 11, 12 für die Pins auf. Das statorinneren Bein 10b weist zwei Ecken 17b in Richtung der Kontaktpunkte 13, 14 für die Pins auf. Ferner können die beiden Beine 10a, 10b in Richtung der Kontaktfläche eine Biegung 10c, 10d aufweisen.

In Figur 4 ist die Schnittstelle 20 mit dem statoräußeren Bein 20a und dem statorinneren Bein 20b gezeigt. Das statoräußere Bein 20a weist eine Ecke 27a in Richtung der Kontaktpunkte 21, 22 für die Pins auf. Vor den Kontaktpunkten knickt das statoräußere Bein 20a mit einen Knick 26a ab.

Das statorinneren Bein 20b weist eine Verdrehung 25 in lateraler als auch in axialer Richtung zum Stator auf, zusätzlich weist das statorinnere Bein 20b eine Ecke 27b in Richtung der Kontaktpunkte 23, 24 für die Pins auf. Vor den Kontaktpunkten knickt das statorinnere Bein 20b mit eine Knick 26b ab. Ferner können die beiden Beine 20a, 20b in Richtung der Kontaktfläche 29 eine Biegung 20c 20d aufweisen.

In Figur 5 ist die Schnittstelle 30 mit dem statoräußeren Bein 30a und dem statorinneren Bein 30b gezeigt. Das statoräußere Bein 30a verbindet die Kontaktfläche 39 mit den Kontaktpunkten 31, 32 für die Pins des Stators. Vor den Kontaktpunkten 31, 32 knickt das statoräußere Bein 30a mit einem Knick 36a ab.

Das statorinneren Bein 30b weist eine Verdrehung 35 in lateraler als auch in axialer Richtung zum Stator auf, zusätzlich weist das statorinnere Bein 20b eine Ecke 37b in Richtung der Kontaktpunkte 33, 34 für die Pins auf. Vor den Kontaktpunkten 33, 34 knickt das statorinnere Bein 30b mit eine Knick 36b ab. Ferner können die beiden Beine 30a, 30b in Richtung der Kontaktfläche 39 eine Biegung 30c 30d aufweisen.

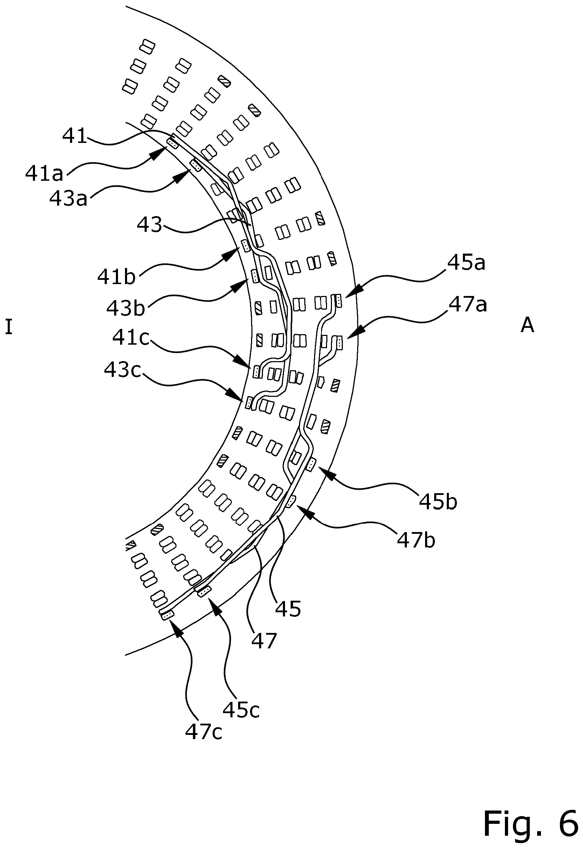

In Figur 6 ist eine Draufsicht auf einen Stator 1 ohne Schnittstellen gezeigt. Der Stator weist eine Vielzahl von Pins und vier Sternpunktverbinder 41, 43, 45, 47 auf. Jeder Sternpunktverbinder ist mit drei Pins (Bezugszeichen Sternpunktverbinder und a, b, c) verbunden.

Die Pins unterschieden sich in ihrer Länge, wobei die drei von einem Sternpunktverbinder verbundenen Pins gleich lang sind. Jeder der durch einen Sternpunktverbinder verbundenen Pins stellt das Ende einer Spule dar und der Sternpunktverbinder bildet somit einen Sternpunkt von drei verbundenen Spulen. Die Sternpunktverbinder können untereinander ebenfalls verbunden sein und somit mehrere Sternpunkt auf ein gleiches elektrisches Potential legen.

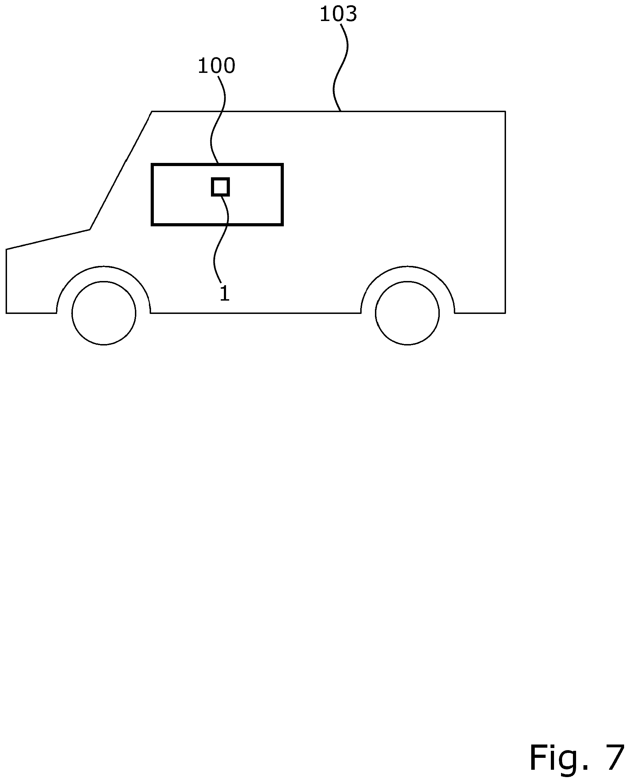

Figur 7 ist eine Prinzipskizze eines Ausführungsbeispiels eines Fahrzeugs 103, beispielsweise eines Hybridfahrzeugs oder eines Elektrofahrzeugs, umfassend eine elektrische Maschine 100, insbesondere einen Elektromotor, mit einem Ausführungsbeispiel des Stators 1 zum Antreiben des Fahrzeugs 103.

## Patentansprüche

1. Stator (1) für eine elektrische Maschine (100), umfassend
- eine Vielzahl von Pins (11, 12, 13, 14, 21, 22, 23, 24, 31, 32, 33, 34) die auf mindestens zwei konzentrischen Kreisen angeordnet sind;
- eine Schnittstelle (10, 20, 30) mit mindestens einer Kontaktfläche (19, 29, 39), die mit zwei elektrisch leitenden Beinen (10a, 10b, 20a, 20b, 30a, 30b) verbunden ist und durch die Beine gestützt wird,
- um einen festen Punkt zum Anschluss der Phasenleiter von einem Inverter zu ermöglichen,
- wobei die Beine (10a, 20a, 30a, 10b, 20b, 30b) jeweils mit mindestens einem Pin (11, 12, 13, 14, 21, 22, 23, 24, 31, 32, 33, 34) auf verschiedenen konzentrischen Kreisen verbunden sind,
- wobei jedes Bein (10a, 20a, 30a, 10b, 20b, 30b) eine Biegung (10c, 10d, 20c, 30c, 30d) zum anderen Bein hin aufweist, wobei jede Biegung (10c, 10d, 20c, 30c, 30d) im Wesentlichen 90 Grad beträgt und sich die Kontaktfläche (19, 29, 39) zwischen den Biegungen (10c, 10d, 20c, 30c, 30d) befindet,
- **dadurch gekennzeichnet, dass** mindestens ein Bein (20b, 30b) eine Verdrehung (25, 35) zwischen dem Pin und der Kontaktfläche (29, 39) aufweist.

2. Stator (1) gemäß Anspruch 1, wobei die Verdrehung (25, 35) sowohl axial als auch radial zum Stator (1) vorliegt.

3. Stator (1) gemäß einer der vorherigen Ansprüche, wobei zumindest ein Bein (10a, 10b, 20a, 20b, 30a, 30b) an eines der Schnittstelle abgewandtes Ende mit mindesten zwei Pins verbunden ist.

4. Stator (1) gemäß Anspruch 3, wobei das Bein zwischen der Verdrehung (25, 35) und des der Schnittstelle abgewandten Endes in einem Winkel (26, 36) von 80 bis 100, insbesondere rechtwinklig, abknickt.

5. Stator (1) gemäß einer der vorherigen Ansprüche, wobei die Schnittstelle an der Kontaktfläche (19, 29, 39), eine Ausnehmung für einen Kontaktstift oder Kontaktschraube aufweist.

6. Stator (1) gemäß einer der vorherigen Ansprüche, wobei unterhalb der Schnittstelle ein Leiter (41, 43) ausgewählte Pins (41a, 41b, 41c, 43a, 43b, 43c) verbindet.

7. Fahrzeug (103) mit einer elektrischen Maschine (100) mit einem Stator (1) gemäß einer der vorherigen Ansprüche.

## Claims

1. Stator (1) for an electric machine (100), comprising
- a large number of pins (11, 12, 13, 14, 21, 22, 23, 24, 31, 32, 33, 34) which are arranged in at least two concentric circles;
- an interface (10, 20, 30) having at least one contact area (19, 29, 39) which is connected to two electrically conductive legs (10a, 10b, 20a, 20b, 30a, 30b) and is supported by the legs
- in order to allow a fixed point for connection of the phase conductors of an inverter,
- wherein the legs (10a, 20a, 30a, 10b, 20b, 30b) are each connected to at least one pin (11, 12, 13, 14, 21, 22, 23, 24, 31, 32, 33, 34) in different concentric circles,
- wherein each leg (10a, 20a, 30a, 10b, 20b, 30b) has a bend (10c, 10d, 20c, 30c, 30d) in the direction of the other leg, wherein each bend (10c, 10d, 20c, 30c, 30d) is substantially 90 degrees and the contact area (19, 29, 39) is located between the bends (10c, 10d, 20c, 30c, 30d),
- **characterized in that** at least one leg (20b, 30b) has a twist (25, 35) between the pin and the contact area (29, 39).

2. Stator (1) according to Claim 1, wherein the twist (25, 35) is both axial and radial with respect to the stator (1).

3. Stator (1) according to either of the preceding claims, wherein at least one leg (10a, 10b, 20a, 20b, 30a, 30b) is connected to at least two pins at an end facing away from the interface.

4. Stator (1) according to Claim 3, wherein the leg bends at an angle (26, 36) of from 80 to 100, in particular at a right angle, between the twist (25, 35) and the end facing away from the interface.

5. Stator (1) according to any of the preceding claims, wherein the interface has a cutout for a contact pin or contact screw in the contact area (19, 29, 39).

6. Stator (1) according to any of the preceding claims, wherein a conductor (41, 43) connects selected pins (41a, 41b, 41c, 43a, 43b, 43c) beneath the interface.

7. Vehicle (103) having an electric machine (100) with a stator (1) according to any of the preceding claims.

## Revendications

1. Stator (1) pour une machine électrique (100), comprenant
- une pluralité de broches (11, 12, 13, 14, 21, 22, 23, 24, 31, 32, 33, 34) qui sont disposées sur au moins deux cercles concentriques ;
- une interface (10, 20, 30) pourvue d'au moins une surface de contact (19, 29, 39) qui est reliée à deux pattes électriquement conductrices (10a, 10b, 20a, 20b, 30a, 30b) et est supportée par lesdites pattes,
- afin de permettre un point fixe pour le raccordement des conducteurs de phase provenant d'un onduleur,
- dans lequel les pattes (10a, 20a, 30a, 10b, 20b, 30b) sont reliées respectivement à au moins une broche (11, 12, 13, 14, 21, 22, 23, 24, 31, 32, 33, 34) sur différents cercles concentriques,
- dans lequel chaque patte (10a, 20a, 30a, 10b, 20b, 30b) présente une courbure (10c, 10d, 20c, 30c, 30d) vers l'autre patte, dans lequel chaque courbure (10c, 10d, 20c, 30c, 30d) est substantiellement égale à 90 degrés, et la surface de contact (19, 29, 39) se trouve entre les courbures (10c, 10d, 20c, 30c, 30d),
- **caractérisé en ce qu'**au moins une patte (20b, 30b) présente une torsion (25, 35) entre la broche et la surface de contact (29, 39).

2. Stator (1) selon la revendication 1, dans lequel la torsion (25, 35) est présente à la fois axialement et radialement par rapport au stator (1).

3. Stator (1) selon l'une quelconque des revendications précédentes, dans lequel au moins une patte (10a, 10b, 20a, 20b, 30a, 30b) est reliée à au moins deux broches, au niveau d'une extrémité détournée de l'interface.

4. Stator (1) selon la revendication 3, dans lequel la patte est pliée entre la torsion (25, 35) et l'extrémité détournée de l'interface selon un angle (26, 36) de 80 à 100, en particulier selon un angle droit.

5. Stator (1) selon l'une quelconque des revendications précédentes, dans lequel l'interface présente au niveau de la surface de contact (19, 29, 39) un évidement pour une fiche de contact ou une vis de contact.

6. Stator (1) selon l'une quelconque des revendications précédentes, dans lequel, au-dessous de l'interface, un conducteur (41, 43) relie des broches sélectionnées (41a, 41b, 41c, 43a, 43b, 43c).

7. Véhicule (103) comprenant une machine électrique (100) pourvue d'un stator (1) selon l'une quelconque des revendications précédentes.
